# EUROPEAN PATENT SPECIFICATION

(11) **EP 3 263 400 B1**
(45) Date of publication and mention of the grant of the patent: **13.03.2019**
(21) Application number: 16176314.9
(22) Date of filing: 27.06.2016
(51) Int. Cl.: B60N 3/10, B60N 2/75

(54) **CUP HOLDER RELEASABLY MOUNTABLE ON AN ARMREST OF A VEHICLE**
BECHERHALTER LÖSBAR MONTIERBAR AN EINER ARMLEHNE EINES FAHRZEUGS
PORTE-GOBELET MONTÉ AMOVIBLE SUR UN ACCOUDOIR D'UN VÉHICULE

(43) Date of publication of application: 03.01.2018
(73) Proprietor: Ford Global Technologies, LLC, Dearborn, MI 48126 (US)
(72) Inventor: ARPINAR, Arda, Kartal-Istanbul (TR); KASAB, Semih, Adapazari /SAKARYA (TR); Kaynar, Murat, Gölcük/KOCAELI (TR)
(74) Representative: Illing, Rolf

(56) References cited:
- DE-A1-102009 036 258
- US-A- 5 044 577
- US-A- 5 238 212
- US-B1- 6 227 511

## Description

The present invention relates in general to a cup holder for holding a cup or bottle or other kind of beverage container in a vehicle. More in particular, the present invention relates to a cup holder which is releasably mountable.

The present invention is related to a cup holder for holding a cup or bottle or other kind of beverage container in a vehicle, more in particular a wheeled vehicle such as a car or a van or the like.

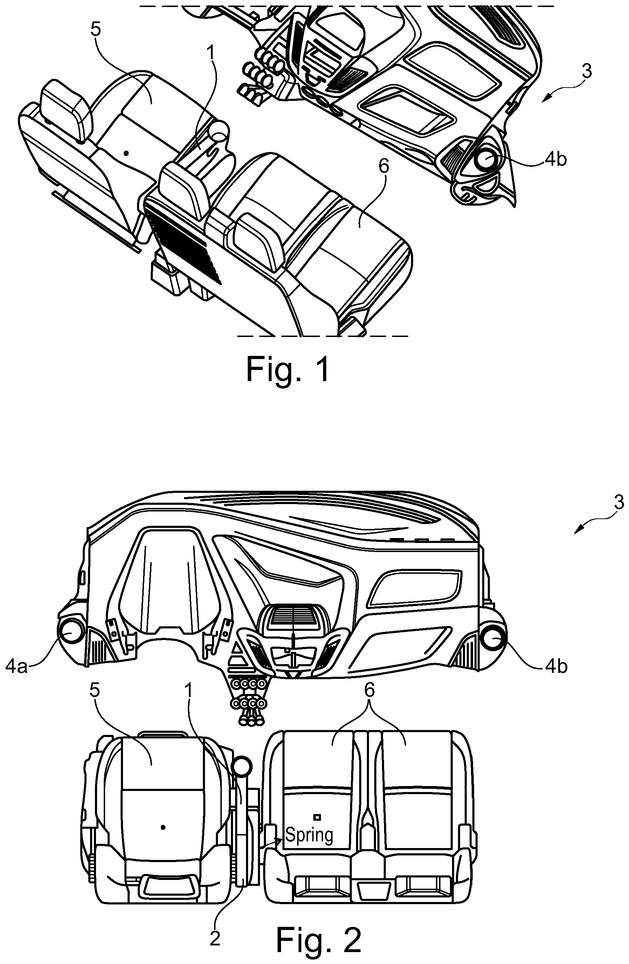

Cup holders became a highly desired feature for the interior systems for not only passenger cars but also commercial vehicles. Nowadays, in some vehicle lines the cup holders are placed into sides of the dashboard, as there is insufficient space at the center of the dashboard to put a cup holder, especially for the dual passenger seated commercial vehicles like VAN vehicles. An example of an existing cup holder is shown in FIG. 2, where the dashboard has an integrated left cup holder 4a and an integrated right cup holder 4b.

A problem of such cup holders or the beverage container put therein, is that the latter may obstruct the view in the side mirror.

Another type of a cup holder releasably mountable to an armrest of a chair is disclosed in US 5,238,212 A. The cup holder comprises an elongate tubular body having a first end integrally connected to a cup-receiving support head, and a second end, opposite the first end, comprising an opening for receiving part of the armrest. Further, the cup holder comprises resilient leaf spring members mounted within the opening of the tubular body for releasably clamping the armrest when inserted in the opening.

Furthermore, US 5,044,577 A discloses a holder device for a beverage container which includes an anchor and holder body. The anchor includes a wedge-like element adjustably connected to the holder body. The wedge-like element is adapted for insertion into an ashtray socket formed in a passenger compartment of a vehicle for anchoring the holder body so that a beverage container is held by the holder device within container receptacles.
The present invention has the object to provide a cup holder which does not prevent good sight of the driver.
It is also an object of embodiments of the present invention to provide a cup holder which can be releasably mounted, so that it can be readily installed and removed when desired. This also facilitates installation after production of the vehicle, as an add-on.
It is also an object of embodiments of the present invention to provide a cup holder which allows easy access to the cup or bottle or beverage container, and requires only minimal movement and thus minimal distraction from the driver, thereby increasing safety and user convenience.
It is also an object of embodiments of the present invention to provide a cup holder with which the risk of spillage is reduced, thereby increasing safety and user convenience.
These and other objects are achieved by a cup holder having the features of claim 1. Further, particularly advantageous embodiments of the invention are disclosed in the dependent claims.

According to the present invention a cup holder releasably mountable to an armrest of a vehicle is disclosed, the cup holder comprising: an end portion having a shape for holding a cup or bottle or beverage container; an elongated tubular portion having a first end connected to the end portion and a second end, opposite the first end, comprising an opening for receiving at least part of the armrest; the elongated tubular portion having means for releasably clamping the armrest when inserted in the opening, without damaging the armrest.

It is an advantage of such a cup holder that it can be mounted to or on an armrest, which is located directly adjacent the driver's seat, hence it does not obstruct the view in the side mirrors.

It is an advantage that the cup holder is releasably mountable to the armrest, so that it can be installed when desired (e.g. before starting a long trip), and removed when desired (e.g. when parked in a parking space).

It is an advantage that the cup holder has means for clamping the armrest, so that the risk of the cup holder unintentionally being removed from the armrest is minimal, hence also the risk of spillage is reduced.

It is an advantage of using clamping means that the inner dimensions (e.g. inner diameter or inner width and height) of the elongated tubular section need not be exactly matched with that of the armrest, but a relatively large tolerance margin (e.g. up to several cm) may be acceptable. Thus a single cup holder having particular dimensions may be suited for armrests of various dimensions.

According to the present invention, the means for releasably clamping the armrest comprises a resilient material which is a reversibly compressible and expandable foam material, loosely or fixedly arranged inside the interior of the elongated tubular portion, and adapted for being compressed when the armrest is inserted inside the tubular opening, thereby clamping the armrest.

It is an advantage of using a resilient material, i.e. a reversibly compressible and expandable foamed material, preferably having a first, substantially planar surface for facing an inner wall of the elongated tubular portion, and a second, non-planar surface for facing the armrest, e.g. an undulating surface, or having a plurality of protrusions, because such a surface made of such a material also automatically provides a suitable clamping force when the armrest is inserted inside the hollow space of the elongated tubular portion. The more the resilient material, i.e. foam is compressed, the higher the clamping force. By providing a second, non-planar surface, the foam can expand laterally when being compressed. By choosing an appropriate shape for the second surface of the resilient material, e.g. a shape having a sinusoidal or triangular or trapezoidal shape, a suitable clamping force can be provided, allowing for easy insertion and removal, yet providing a good mounting with a minimum risk of inadvertent loosening of the cup holder.

The resilient material may for example be loosely applied inside the elongated tubular portion, and may have the shape of a sleeve which may be inserted inside the tubular portion before being pushed over the armrest.

Alternatively the sleeve may be "wrapped over" the armrest before the cup holder is slid on the sleeve.

Alternatively, the resilient material, i.e. the reversibly compressible and expandable foamed material, may be a layer which is fixed to an inner wall of the cup holder, e.g. glued thereto. As described above, preferably this layer has a second, non-planar inner surface, but e.g. an undulated shape, or a shape with a plurality of protrusions. Glueing this layer to the inside of the cup holder may provide a better clamping, and reduce the risk of inadvertently removing the cup holder.

According to an advantageous embodiment of the present invention, the elongated tubular portion has a substantially rectangular cross section, optionally with rounded edges.

A rectangular cross section, or any cross section with a substantially flat upper inner side, has the advantage (as compared to e.g. a circular cross section) that the cup holder has a minimum risk of being inadvertently rotated, thus the risk of spillage is further reduced or eliminated.

According to a further advantageous embodiment of the present invention, a cross sectional area of the elongated tubular portion is substantially constant over at least 50 % of the length of the elongated tubular portion, preferably over at least 70 % of the length of the elongated tubular portion.

A cup holder with a substantially constant cross section, especially when containing a compressible foamable material as a clamping mechanism, has the advantage that the clamping force exerted upon the armrest gradually increases (e.g. almost linearly) with the penetration depth of the armrest inside the elongated tubular portion, thus providing good clamping.
According to a further advantageous embodiment of the present invention, a cross sectional area of the elongated tubular portion is monotonically decreasing over at least 50 % of the length of the elongated tubular portion, preferably over at least 70 % of the length of the elongated tubular portion, in a direction towards the end portion.

It is an advantage of a cup holder with a decreasing cross sectional area, e.g. having an elongated tubular section with a substantially conical shape, that it may be mounted on an even larger variety of armrests of various dimensions, because the difference between the inner dimensions of the cup holder and the outer dimensions of the armrest varies over the length of the cup holder, and at some point this will provide a relatively low clamping force, at another point a medium clamping force, and at yet another point a relatively large clamping force.
According to yet a further advantageous embodiment of the present invention, the means for releasably clamping the armrest comprises at least one first movable element and a first spring, the movable element preferably being pivotally connected to an inner wall of the elongated tubular portion, and being pushed away from the inner wall by means of the first spring.
It is an advantage of using a spring and a pivotable element for clamping, because it can be produced relatively easily, and because it is highly reliable during actual use, with no significant wear. Preferably the movable element is a polished slightly bended or rounded metal plate, e.g. made of aluminum or stainless steel, but a plastic material may also be used. Such a cup holder can be easily mounted on the armrest by "simply pushing" the cup holder over the armrest. The spring will automatically engage and exert a clamping force. Likewise, the cup holder can be very easily removed from the armrest by simply pulling the cup holder away from the armrest, the spring will automatically disengage when the cup holder is removed from the armrest. The bended or rounded metal plate will not significantly damage or scratch the armrest.

According to a further advantageous embodiment of the present invention, the means for releasably clamping the armrest comprises at least one clamping plate arranged inside the elongated tubular portion and being movable inwardly and outwardly by means of a bolt.

In this embodiment, the cup holder may be slid on the armrest in a first operation, and clamped thereto in a second operation. This offers the advantage that the clamping force is independent of the force required to push the cup holder over the armrest. In particular, the clamping force may be much higher than the force required to push or merely slide the cup holder on the armrest. In this way a very strong fixation can be provided, but only needs to be provided to the armrest when the cup holder is in its final position. It also allows a good clamping irrespective of the inner dimensions of the elongated tubular portion, and the outer dimensions of the armrest, which may be quite different. By using a clamping plate having a sufficiently large area, and preferably having a bended or rounded surface, and preferably made of metal, e.g. aluminum or stainless steel, the risk of damaging the armrest is minimized.

It is an advantage of locating the bolts on the bottom side of the cup holder, because in this position it will not hinder the driver or the passengers.

According to a further advantageous embodiment of the present invention, the bolt has a butterfly tail.

It is an advantage in that this allows tight fastening of the bolts, without requiring any tools, which allows very convenient mounting/dismounting of the cup holder to/from the armrest.

According to a further advantageous embodiment of the present invention, the end portion has an annular ring shape for receiving and holding said cup or bottle or beverage container.

It is an advantage of using an annular ring shape (having a given diameter) in that it is very suitable for holding a cup with a conical shape, the latter having a non-constant diameter at different height positions of the cup. This has the advantage that the cup, when inserted in the annular ring, will automatically stop at a suitable position. It also allows the cup to be pushed upwards from below, if desired, for easily removal of the cup.

According to a further advantageous embodiment of the present invention, the end portion has a cylindrical or truncated conical shape with a closed bottom, adapted for receiving said cup or bottle or beverage container.

Using a cylindrical or truncated conical shape with a closed bottom offers many of the same advantages as an end portion with an annular ring shape, but has the additional advantage that the bottom is closed. This allows that also bottles or metal cans or other beverage containers with a cylindrical shape, or with a diameter smaller than the inner diameter of the cup holder, can be placed in the cup holder, thus allows holding a much wider range of beverage containers.

According to a further advantageous embodiment of the present invention, the end portion further comprises at least one second movable element for clamping said cup or bottle or beverage container, the second movable element being movable between a first position in which the movable element extends at least partially inside said annular ring or truncated conical shape, and a second position in which the second movable element is substantially flush with an inner wall of said annular ring or truncated conical shape, the second movable element being operated by a second spring adapted for clamping said cup or bottle or beverage container when at least partly inserted in said annular ring or truncated conical shape.

Using a movable element and a spring in the end portion offers the advantage that the cup or bottle or metal can or the like can be clamped. This provides for stable positioning of said cup or bottle or the like, reducing the risk of spilling.

According to a further advantageous embodiment of the present invention, the end portion has a size and shape sufficiently large for receiving a standard 33 cl metal beverage can over at least 60 % of its height, preferably at least 70 %.

This is a convenient size. This size is also suitable for holding many types of small bottles. By providing a shape that contains at least 60 % or at least 70 % of the height of the standard can, the risk of inadvertently pushing the can out of the cup holder is drastically reduced or even minimal.

According to a further advantageous embodiment of the present invention, the end portion has a size and shape sufficiently large for receiving a 0.5 liter Mc Donalds/Starbucks V cup shape, and in case the end portion has a closed bottom, for receiving at least 60 % of the height of said cup shape.

Further features and advantages of the present invention will become apparent from the following description of non-limiting embodiments of the invention which will be explained below with reference to the drawing. In this drawing:
- FIG. 1: is a 3D top perspective view of the front seats of a vehicle, where a cup holder according to the present invention is mounted to the armrest located on the right of the driver seat;
- FIG. 2: is a top view of the vehicle of FIG. 1, also showing existing cup holders built-in on the left side and right side of the dashboard;
- FIG. 3: is a 3D side elevated perspective view of the vehicle of FIG. 1;
- FIG. 4: is a side view of the vehicle of FIG. 3;
- FIG. 5 and FIG. 6: show an exemplary embodiment of a cup holder according to the present invention, as seen from the outside; the cup holder has an elongated tubular portion (right of the figure), and an end portion for holding a cup (left of the figure), wherein FIG. 5 is a side view and FIG. 6 is a top view;
- FIG. 7: is a cross-sectional view showing the cup holder of FIG. 5 with a flexible material arranged inside an inner wall of the tubular portion, wherein the flexible material may have a corrugated shape, and is a foamed material;
- FIG. 8: is a rear view of the cup holder of FIG. 5 (looking inside the elongated tubular portion);
- FIG. 9: is a variant of the embodiment of FIG. 7, comprising at least one movable element, e.g. a movable plate, operated by a spring, for clamping the armrest to the upper wall of the cup holder;
- FIG. 10: is another variant of the embodiment of FIG. 7, comprising at least one movable element, e.g. two movable plates, each movable by means of a bolt, for clamping the armrest to the upper wall of the cup holder;
- FIG. 11 and FIG. 12: each show an embodiment of a cup holder according to the present invention, where the end portion has a truncated cone shape, and contains means comprising a movable element and a spring for holding or clamping the cup or bottle or beverage container; wherein FIG. 11 shows a situation when the cup holder does not contain a cup or bottle or the like, and wherein the movable element extends in the space defined by the truncated cone, and FIG. 12 shows a situation when a cup is present, and the means is substantially flush with the inner wall of the truncated cone surface;
- FIG. 13: shows the cup holder according to the present invention mounted to an armrest of a vehicle, wherein the driver's arm is located next to the cup holder, and no cup or bottle or container is present in the cup holder;
- FIG. 14: shows the cup holder according to the present invention mounted to an armrest of a vehicle, wherein the driver is picking a bottle out of the end portion of the cup holder, in a very convenient manner, while driving with his left hand;
- FIG. 15: shows the cup holder according to the present invention mounted to an armrest of a vehicle, wherein the driver is switching gear without being hindered by the bottle in the cup holder;
- FIG. 16: shows the cup holder according to the present invention mounted to an armrest of a vehicle, wherein the driver's arm elbow is resting on the cup holder;
- FIG. 17: shows the armrest in an upright position, with the cup holder still mounted thereon;
- FIG. 18: shows the cup holder being stowed in the upper compartment of the right front door after being removed from the armrest;
- FIG. 19: shows the cup holder being stowed in the lower compartment of the right front door after being removed from the armrest;
- FIG. 20: shows the elongated tubular portion of the cup holder being inserted in an elongated cavity in the dashboard of the vehicle after being removed from the armrest; and
- FIG. 21: shows the cup holder being inserted in the glove compartment of the dashboard of the vehicle after being removed from the armrest.

The present invention is related to a cup holder 1 for a vehicle, such as for use in a car or in a van.
A problem of existing cup holders is: i) they may be located in a position blocking view of one side mirror or both side mirrors; ii) they are embedded in the dashboard of the car, thus are present only in particular car models; iii) the driver (of vehicles having the steering wheel on the left-hand side) needs to move his right hand over the driving wheel to reach the cup or beverage while driving with his left arm, which is not very convenient, and may even lead to dangerous situations.
According to the present invention, an elegant and simple solution is provided which solves all these problems.

The inventors surprisingly came to the idea of providing a cup holder 1 as defined in claim 1.

Referring to the figures, FIG. 1 shows a 3D top perspective view, and FIG. 2 shows a top view of a vehicle having a dashboard 3 with embedded cup holders 4a, 4b (state of the art) located respectively on the left extreme and right extreme side of the dashboard, near the side mirrors (not shown). The vehicle has the armrest 2 located between the driver's seat 5 and the passenger seats 6. Also shown is an embodiment of a cup holder 1 according to the present invention. The cup holder 1 is slid on the armrest 2, and thereby located on the right of the driver's seat 5, for easy access by the driver (not shown).

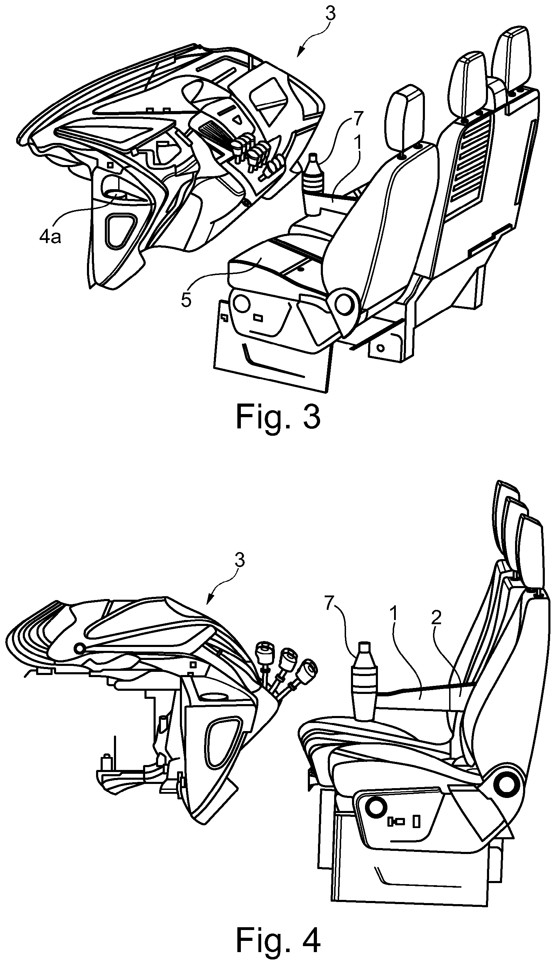

FIG. 3 is another 3D view on the vehicle of FIG. 1. In the example of FIG. 3, the cup holder holds a bottle 7.

FIG. 4, which is a side view of FIG. 3, clearly shows that the cup holder 1 is mounted to the armrest 2. It is preferred that the cup holder 1 does not extend beyond the driver's seat, but the skilled person can easily choose a suitable length such that the cup holder 1, or any bottle 7 placed therein does not hinder driving activities, such as e.g. changing gears.

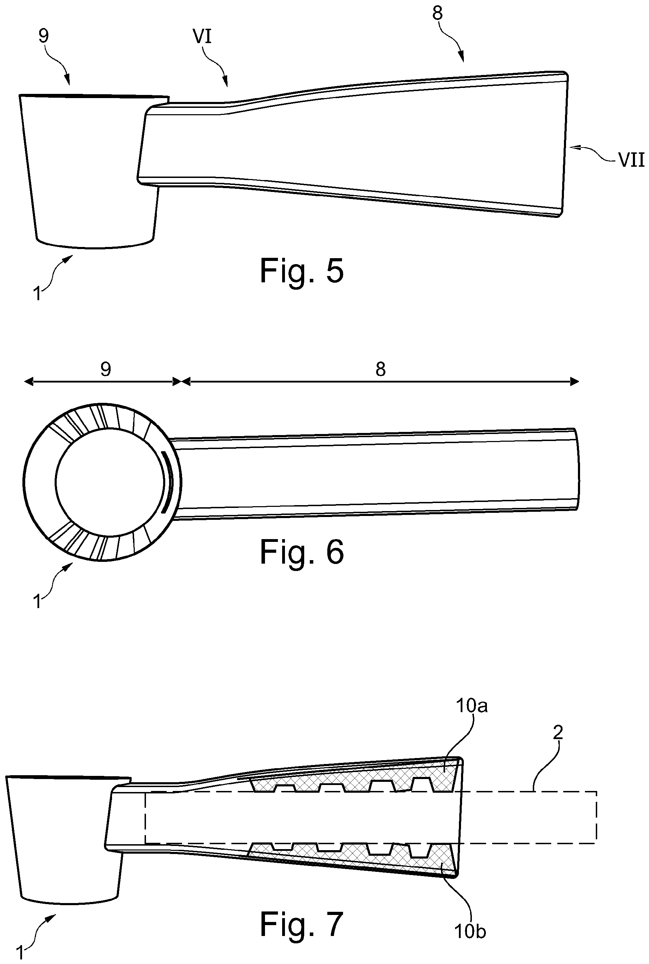

FIG. 5 and FIG. 6 show an exemplary embodiment of a cup holder 1 according to the present invention, as seen from the outside. The cup holder 1 has an elongated tubular portion 8 (right of FIG. 5 and FIG. 6), and an end portion 9 for holding a cup (left of FIG. 5 and FIG. 6). FIG. 5 is a side view. FIG. 6 is a top view. The end portion 9 shown in FIG. 5 and FIG. 6 has a truncated conical shape with a closed bottom, but that is not absolutely required for the invention, and other shapes may also be used.

The cup holder 1 of the present invention can be releasably mounted and clamped to the armrest 2 in several ways, as will be illustrated in FIG. 7 to FIG. 10.

FIG. 7 is a cross-sectional view showing the cup holder 1 of FIG. 5 and FIG. 6 with a flexible, reversibly compressible and expandable material which is a foam material, arranged against an inner wall (here the bottom wall and the top wall) of the elongated tubular portion 8 of the cup holder 1. The flexible material may have a first substantially planar surface which can be glued to an inner wall of the elongated portion 8 of the cup holder, and may have a second surface, opposite the first surface, having a non-planar shape, for example having a corrugated or undulated shape, or a shape having a plurality of protrusions. The flexible material may be present on only two inner walls of the elongated tubular portion of the cup holder, e.g. only the upper and bottom inner walls but not the side walls, or on only three inner walls, or on all four inner walls.

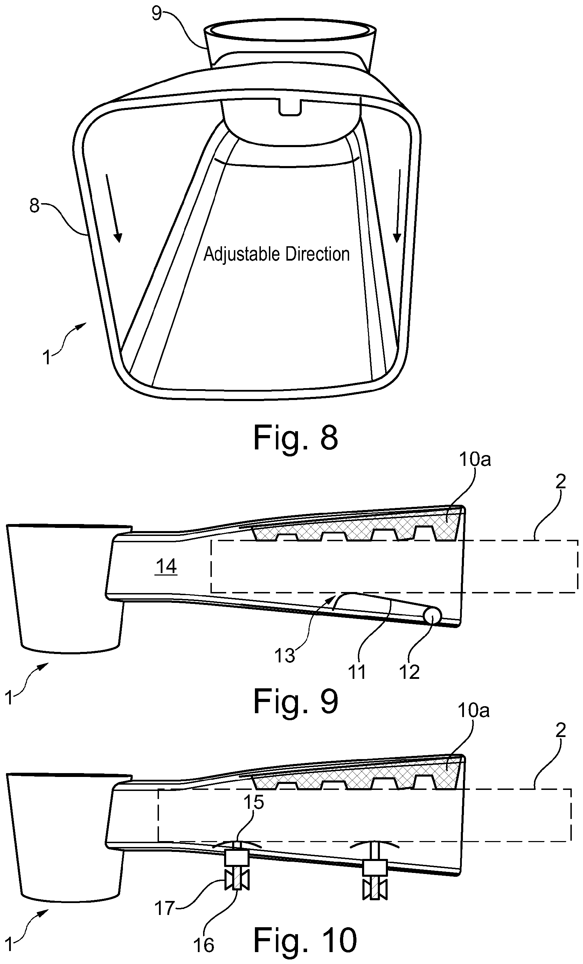

FIG. 8 is a rear view of the cup holder of FIG. 5 (looking inside the elongated tubular portion).

FIG. 9 is a variant of the embodiment of FIG. 7, comprising at least one movable element 11, e.g. a movable plate, operated by a spring 12, for clamping the armrest 2 to the upper wall of the elongated portion 8 of the cup holder. The movable element 11 may be formed integral with the spring 12. The movable element 11 may have a curved or bended end 13 for smooth contact with the armrest 2. In the example shown in FIG. 9, the elongated tubular portion also contains a flexible material 10a on the inner upper wall.

In a variant of the embodiment shown in FIG. 9, the inner upper wall portion may have an additional movable element and an additional spring (not shown).

As can be appreciated by the skilled person, the cup holder 1 can be readily mounted to the armrest 2 by simply sliding the cup holder 1 on the armrest 2, such that at least a portion of the armrest 2 is inserted in the cavity 14 of the elongated tubular portion 8. The movable element 11 and the spring 12 are arranged such that the spring automatically pushes the movable element 11 against a side of the armrest 2, thereby clamping the armrest 2 so as to keep the cup holder 1 in position. The skilled person can easily find a suitable spring force by performing routine experiments.

FIG. 10 is another variant of the cup holder 1 shown in FIG. 7. This cup holder 1 comprises two movable plates 15 (but only one would also work), each movable by means of a bolt 16, for clamping the armrest 2. Preferably, the bolts have a butterfly tail 17, which allows the bolts 16 to be easily fastened or loosened without requiring special tools. The bolts 16 are preferably located on a bottom side of the elongated tubular portion 8 of the cup holder 1 for not hindering the driver or the passengers. In the example shown in FIG. 10, the elongated tubular portion 8 also contains a flexible material 10a on the inner upper wall.

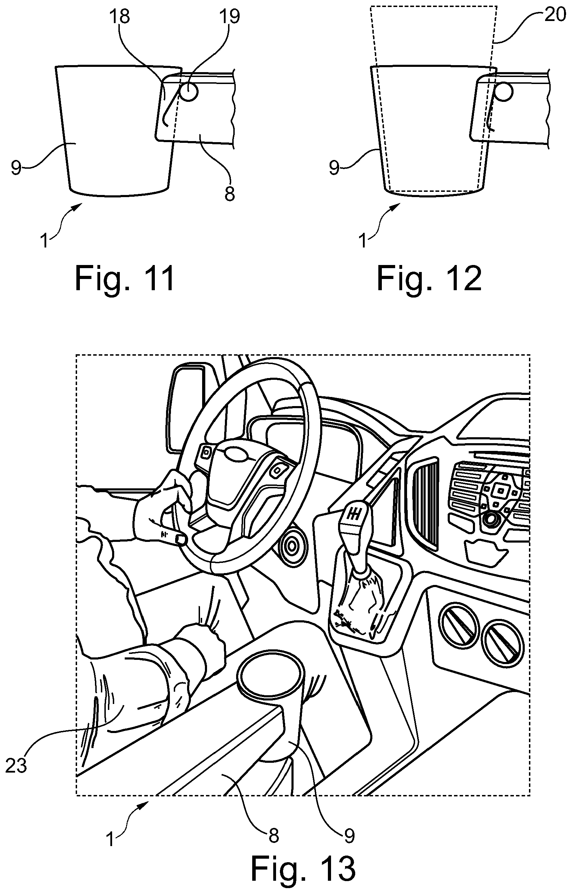

FIG. 11 and FIG. 12 show an example of a cup holder 1, where the end portion 9 has a truncated cone shape. Although not absolutely necessary for the invention, the end portion 9 has means for holding or clamping a cup 20. The cup 20 may be a 0.5 liter Mc Donalds/Starbucks V cup shape. The dimensions of the end portion 9 may be specifically chosen such that at least 60 % of the height of the cup 20 is contained within the space defined by the end portion 9. But of course the invention is not limited hereto, and other dimensions may also be chosen.

The means for holding or clamping the cup 20 may comprise a movable element 18 and a spring 19. This movable element 18 may have a bended or curved end for making smooth contact with the cup or bottle or metal can or other beverage container, and may be made of a metal, such as aluminum or stainless steel, or from a plastic material. The movable element 18 may be formed integral with the spring 19. The clamping force provided by the spring 19 can be much weaker than the clamping force provided by the spring 12. The skilled person can easily find a suitable spring force for envisioned cups or bottles, by doing routine experiments. In FIG. 12 the movable element 18 is substantially flush with the inner wall of the truncated cone surface of the end portion 9.

FIG. 13 to FIG. 16 are pictures of the cup holder 1 mounted to an armrest 2 of a vehicle.

In FIG. 13 the driver's right arm 23 is located next to the cup holder 1, and no cup or bottle or beverage container is present in the end portion 9 of the cup holder 1.

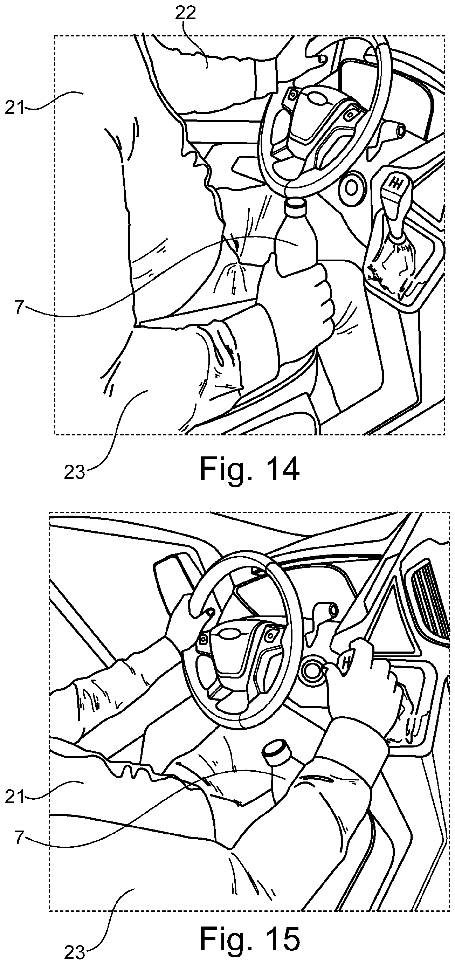

In FIG. 14 the driver is taking a bottle 7 out of the end portion 9 of the cup holder 1, in a very convenient manner, while driving with his left arm 22. As can be seen, he barely has to move his right arm 23 to take the bottle 7 or to put it back, and he certainly does not have to cross his right arm 23 over his left arm 22, as would be needed if the bottle 7 were placed in the cup holder 4a of FIG. 2. Thus mounting the cup holder 1 on the armrest 2 provides for comfortable and safe driving.

As can be seen in FIG. 15, the driver 21 can easily switch gears with his right arm 23 without being hindered by the bottle 7 present in the cup holder 1.

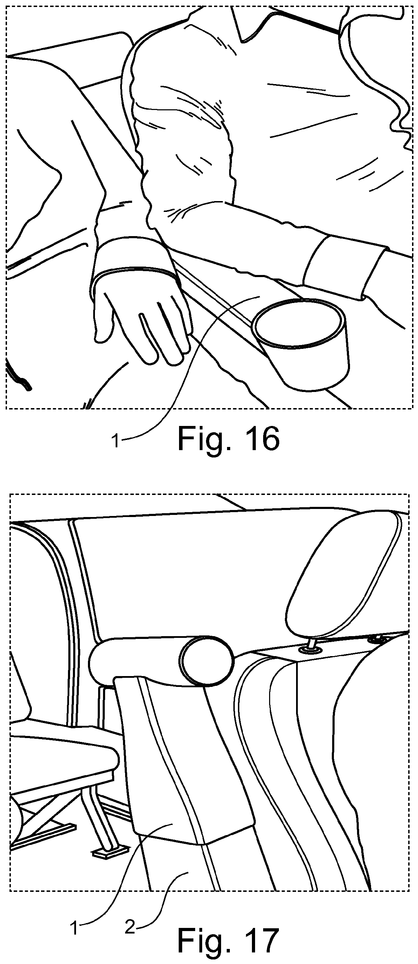

In FIG. 16 the driver's right elbow 24 is resting on the cup holder 1.

FIG. 17 shows the armrest 2 of the vehicle in an upright position, while the cup holder 1 is still mounted thereto. But of course, the cup holder 1 may be removed before the armrest 2 is moved to an upright position.

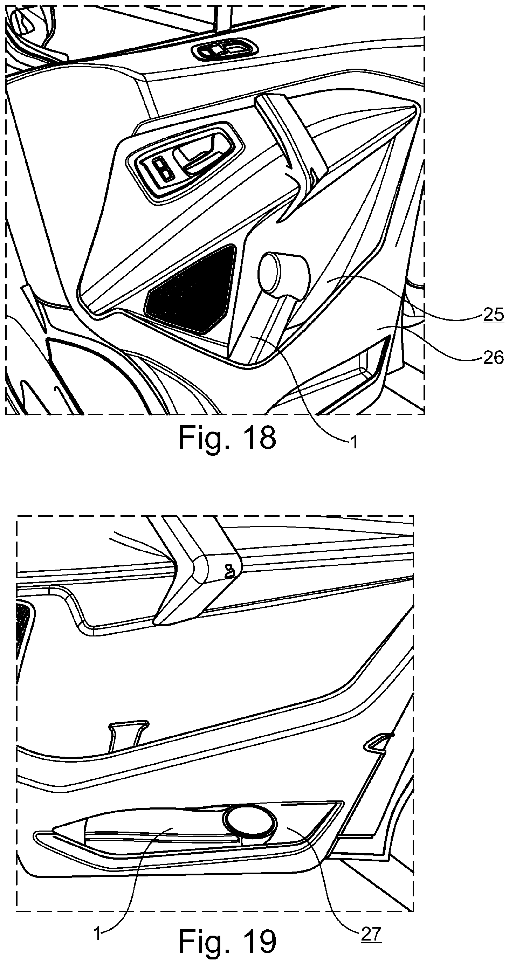

FIG. 18 to FIG. 21 show several examples of where the cup holder 1 can be stowed after being removed from the armrest 2.

In FIG. 18 the cup holder 1 is temporarily stowed in the upper compartment 25 of the right front door 26 of the vehicle.

In FIG. 19 the cup holder 1 is stowed in the lower compartment 27 of the right front door 26.

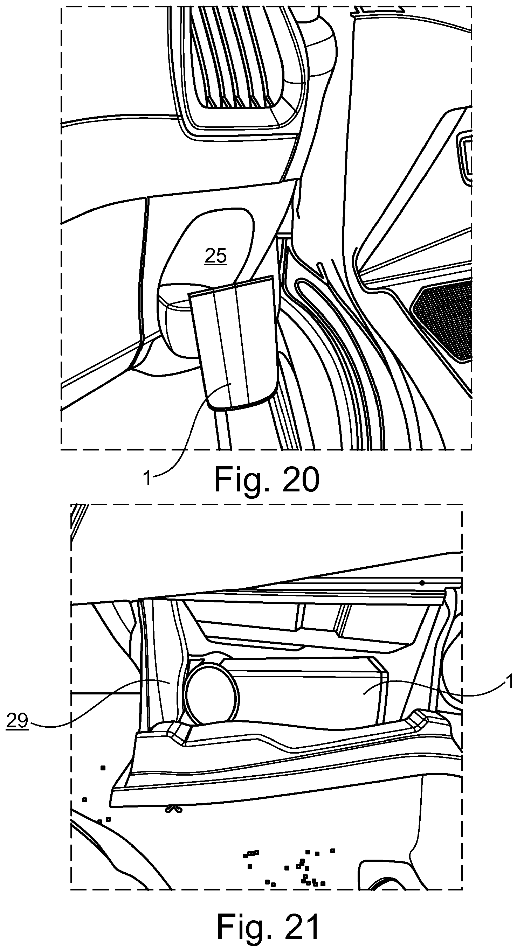

In FIG. 20 the elongated tubular portion 8 of the cup holder 1 is inserted in an elongated cavity 28 in the dashboard 3 of the vehicle.

In FIG. 21 the cup holder is inserted in the glove compartment 29 of the dashboard 3 of the vehicle.

It is evident that these are mere examples to demonstrate that the cup holder 1 can easily be stowed in one of the compartments available in a vehicle.

### REFERENCE NUMERALS

- 1: cup holder
- 2: armrest
- 3: dashboard
- 4a/4b: left/right (prior art) cup holders
- 5: driver's seat
- 6: passenger's seat
- 7: bottle
- 8: elongated tubular portion
- 9: end portion
- 10: flexible material
- 11: first movable element
- 12: first spring
- 13: curved or bended end
- 14: cavity
- 15: movable plates
- 16: bolt
- 17: butterfly tail
- 18: second movable element
- 19: second spring
- 20: V-cup
- 21: driver
- 22: left arm
- 23: right arm
- 24: right elbow
- 25: upper compartment
- 26: right front door
- 27: lower compartment
- 28: elongated cavity
- 29: glove compartment

## Claims

1. A cup holder (1) releasably mountable to an armrest (2) of a vehicle, the cup holder (1) comprising:
- an end portion (9) having a shape for holding a cup (20) or bottle (7) or beverage container;
- an elongated tubular portion (8) having a first end connected to the end portion (9) and a second end, opposite the first end, comprising an opening for receiving at least part of the armrest (2);
wherein the elongated tubular portion (8) comprises means (10; 11,12; 15,16) for releasably clamping the armrest (2) when inserted in the opening, without damaging the armrest (2), wherein the means for releasably clamping the armrest comprises a resilient material (10),
**characterized in that**
the resilient material (10) is a compressible and expandable foam material loosely or fixedly arranged inside the interior of the elongated tubular portion (8) and adapted for being compressed when the armrest (2) is inserted inside the opening, thereby clamping the armrest (2).

2. The cup holder (1) according to claim 1, wherein the elongated tubular portion (8) has a substantially rectangular cross section, optionally with rounded edges.

3. The cup holder (1) according to claim 1 or 2, wherein a cross sectional area of the elongated tubular portion (8) is substantially constant over at least 50 % of the length of the elongated tubular portion, preferably over at least 70 % of the length of the elongated tubular portion.

4. The cup holder (1) according to claim 1 or 2, wherein a cross sectional area of the elongated tubular portion (8) is monotonically decreasing over at least 50 % of the length of the elongated tubular portion, preferably over at least 70 % of the length of the elongated tubular portion, in a direction towards the end portion (9).

5. The cup holder (1) according to any of the previous claims, wherein the means for releasably clamping the armrest (2) comprises at least one first movable element (11) and a first spring (12), the first movable element (11) preferably being pivotally connected to an inner wall of the elongated tubular portion (8), and being pushed away from the inner wall by means of the first spring (12).

6. The cup holder (1) according to any of the previous claims, wherein the means for releasably clamping the armrest (2) comprises at least one clamping plate (15) arranged inside the elongated tubular portion (8) and movable inwardly and outwardly by means of a bolt (16).

7. The cup holder (1) according to claim 6, wherein the bolt (16) has a butterfly tail (17).

8. The cup holder (1) according to any of the previous claims, wherein the end portion has an annular ring shape for receiving and holding said cup (20) or bottle (7) or beverage container.

9. The cup holder (1) according to any of the previous claims, wherein the end portion has a cylindrical or truncated conical shape with a closed bottom for receiving said cup (20) or bottle (7) or beverage container.

10. The cup holder (1) according to any of the claims 8 to 9, wherein the end portion further comprises at least one second movable element (18) for clamping said cup (20) or bottle (7) or beverage container, the second movable element (18) being movable between a first position in which the second movable element (18) extends at least partially inside said annular ring or truncated conical shape, and a second position in which the second movable element (18) is substantially flush with an inner wall of said annular ring or truncated conical shape, the second movable element (18) being operated by a second spring (19) adapted for clamping said cup (20) or bottle (7) or beverage container when at least partly inserted in said annular ring or truncated conical shape.

11. The cup holder (1) according to any of the previous claims, wherein the end portion has a size and shape sufficiently large for receiving a standard 33 cl metal beverage can over at least 60 % of its height, preferably at least 70 %.

## Patentansprüche

1. Becherhalter (1), lösbar montierbar an einer Armlehne (2) eines Fahrzeugs, wobei der Becherhalter (1) umfasst:
- einen Endabschnitt (9) mit einer Form zum Halten eines Bechers (20) oder einer Flasche (7) oder eines Getränkebehälters;
- einen länglichen rohrförmigen Abschnitt (8) mit einem ersten Ende, das mit dem Endabschnitt (9) verbunden ist, und, gegenüber dem ersten Ende, mit einem zweiten Ende, das eine Öffnung zum Aufnehmen von mindestens einem Teil der Armlehne (2) umfasst,
wobei der längliche rohrförmige Abschnitt (8) Mittel (10; 11, 12; 15, 16) umfasst, um die Armlehne (2) beim Einsetzen in die Öffnung lösbar zu verklemmen, ohne die Armlehne (2) zu beschädigen, wobei die Mittel zum lösbaren Verklemmen der Armlehne ein elastisches Material (10) umfassen,
**dadurch gekennzeichnet, dass**
das elastische Material (10) ein zusammendrückbares und expandierbares Schaummaterial ist, das im Inneren des länglichen rohrförmigen Abschnitts (8) lose oder fest angeordnet und dafür geeignet ist, zusammengedrückt zu werden, wenn die Armlehne (2) in die Öffnung eingesetzt wird, wodurch die Armlehne (2) verklemmt wird.

2. Becherhalter (1) nach Anspruch 1, wobei der längliche rohrförmige Abschnitt (8) einen im Wesentlichen rechtwinkligen Querschnitt hat, optional mit abgerundeten Kanten.

3. Becherhalter (1) nach Anspruch 1 oder 2, wobei eine Querschnittsfläche des länglichen rohrförmigen Abschnitts (8) über mindestens 50% der Länge des länglichen rohrförmigen Abschnitts und vorzugsweise über mindestens 70% der Länge des länglichen rohrförmigen Abschnitts im Wesentlichen konstant ist.

4. Becherhalter (1) nach Anspruch 1 oder 2, wobei eine Querschnittsfläche des länglichen rohrförmigen Abschnitts (8) über mindestens 50% der Länge des länglichen rohrförmigen Abschnitts und vorzugsweise über mindestens 70% der Länge des länglichen rohrförmigen Abschnitts in einer Richtung hin zum Endabschnitt (9) gleichbleibend abnimmt.

5. Becherhalter (1) nach einem der vorstehend aufgeführten Ansprüche, wobei die Mittel zum lösbaren Verklemmen der Armlehne (2) mindestens ein erstes bewegbares Element (11) und eine erste Feder (12) umfassen, wobei das erste bewegbare Element (11) vorzugsweise mit einer Innenwand des länglichen rohrförmigen Abschnitts (8) schwenkbar verbunden ist und mittels der ersten Feder (12) von der Innenwand weggedrückt wird.

6. Becherhalter (1) nach einem der vorstehend aufgeführten Ansprüche, wobei die Mittel zum lösbaren Verklemmen der Armlehne (2) mindestens eine Klemmplatte (15) umfassen, die im Inneren des länglichen rohrförmigen Abschnitts (8) angeordnet und mittels einer Schraube (16) nach innen und außen bewegbar ist.

7. Becherhalter (1) nach Anspruch 6, wobei die Schraube (16) ein Butterflyende (17) aufweist.

8. Becherhalter (1) nach einem der vorstehend aufgeführten Ansprüche, wobei der Endabschnitt eine ringförmige Form zum Aufnehmen und Halten des Bechers (20) oder der Flasche (7) oder eines Getränkebehälters hat.

9. Becherhalter (1) nach einem der vorstehend aufgeführten Ansprüche, wobei der Endabschnitt eine zylindrische oder kegelstumpfförmige Form mit einem geschlossenen Boden zum Aufnehmen des Bechers (20) oder der Flasche (7) oder eines Getränkebehälters hat.

10. Becherhalter (1) nach einem der Ansprüche 8 bis 9, wobei der Endabschnitt weiterhin mindestens ein zweites bewegbares Element (18) zum Verklemmen des Bechers (20) oder der Flasche (7) oder eines Getränkebehälters umfasst, wobei das zweite bewegbare Element (18) zwischen einer ersten Position, in der sich das zweite bewegbare Element (18) mindestens teilweise im Inneren der ringförmigen oder kegelstumpfförmigen Form erstreckt, und einer zweiten Position, in der das zweite bewegbare Element (18) im Wesentlichen mit einer Innenwand der ringförmigen oder kegelstumpfförmigen Form bündig abschließt, bewegbar ist, wobei das zweite bewegbare Element (18) durch eine zweite Feder (19) betätigt wird, die dafür geeignet ist, den Becher (20) oder die Flasche (7) oder einen Getränkebehälter zu verklemmen, wenn ein mindestens teilweises Einsetzen in die ringförmige oder kegelstumpfförmige Form erfolgt ist.

11. Becherhalter (1) nach einem der vorstehend aufgeführten Ansprüche, wobei der Endabschnitt eine Größe und Form hat, die ausreichend groß sind, um eine übliche 33 cl-Metallgetränkedose über mindestens 60% und vorzugsweise mindestens 70% ihrer Höhe aufzunehmen.

## Revendications

1. Porte-gobelet (1) pouvant être monté amovible sur un accoudoir (2) d'un véhicule, le porte-gobelet (1) comprenant :
une partie d'extrémité (9) ayant une forme pour tenir un gobelet (20) ou une bouteille (7) ou un récipient pour boisson ;
une partie tubulaire allongée (8) ayant une première extrémité reliée à la partie d'extrémité (9) et une seconde extrémité, opposée à la première extrémité, comprenant une ouverture pour recevoir au moins une partie de l'accoudoir (2) ;
la partie tubulaire allongée (8) comprenant un moyen (10 ; 11, 12 ; 15, 16) pour serrer de manière amovible l'accoudoir (2) lorsqu'il est inséré dans l'ouverture, sans endommager l'accoudoir (2), le moyen pour serrer de manière desserrable l'accoudoir comprenant un matériau élastique (10),
**caractérisé en ce que**
le matériau élastique (10) est un matériau en mousse compressible et expansible disposé de manière lâche ou fixe à l'intérieur de la partie tubulaire allongée (8) et conçu pour être comprimé lorsque l'accoudoir (2) est inséré à l'intérieur de l'ouverture, serrant ainsi l'accoudoir (2) .

2. Porte-gobelet (1) selon la revendication 1, la partie tubulaire allongée (8) ayant une section transversale sensiblement rectangulaire, éventuellement avec des bords arrondis.

3. Porte-gobelet (1) selon la revendication 1 ou 2, une section transversale de la partie tubulaire allongée (8) étant sensiblement constante sur au moins 50 % de la longueur de la partie tubulaire allongée, de préférence sur au moins 70 % de la longueur de la partie tubulaire allongée.

4. Porte-gobelet (1) selon la revendication 1 ou 2, une section transversale de la partie tubulaire allongée (8) diminuant de façon monotone sur au moins 50 % de la longueur de la partie tubulaire allongée, de préférence sur au moins 70 % de la longueur de la partie tubulaire allongée, dans une direction vers la partie d'extrémité (9) .

5. Porte-gobelet (1) selon l'une quelconque des revendications précédentes, le moyen de serrage amovible de l'accoudoir (2) comprenant au moins un premier élément mobile (11) et un premier ressort (12), le premier élément mobile (11) étant de préférence relié de manière pivotante à une paroi intérieure de la partie tubulaire allongée (8) et étant repoussé de la paroi intérieure par le premier ressort (12).

6. Porte-gobelet (1) selon l'une quelconque des revendications précédentes, le moyen pour serrer de manière desserrable l'accoudoir (2) comprenant au moins une plaque de serrage (15) disposée à l'intérieur de la partie tubulaire allongée (8) et mobile vers l'intérieur et vers l'extérieur à l'aide d'un boulon (16).

7. Porte-gobelet (1) selon la revendication 6, le boulon (16) ayant une queue papillon (17).

8. Porte-gobelet (1) selon l'une quelconque des revendications précédentes, la partie d'extrémité ayant une forme de bague annulaire pour recevoir et tenir ledit gobelet (20) ou bouteille (7) ou récipient pour boisson.

9. Porte-gobelet (1) selon l'une quelconque des revendications précédentes, la partie d'extrémité ayant une forme cylindrique ou tronconique avec un fond fermé pour recevoir ledit gobelet (20) ou bouteille (7) ou récipient pour boisson.

10. Porte-gobelet (1) selon l'une quelconque des revendications 8 à 9, la partie d'extrémité comprenant en outre au moins un second élément mobile (18) pour serrer ledit gobelet (20) ou bouteille (7) ou récipient pour boisson, le second élément mobile (18) étant mobile entre une première position dans laquelle le second élément mobile (18) s'étend au moins partiellement à l'intérieur de ladite forme de bague annulaire ou tronconique, et une seconde position dans laquelle le second élément mobile (18) est sensiblement de niveau avec une paroi intérieure de ladite forme de bague annulaire ou tronconique, le second élément mobile (18) étant actionné par un second ressort (19) conçu pour serrer ledit gobelet (20) ou bouteille (7) ou récipient pour boisson lorsqu'il est inséré au moins partiellement dans ladite forme de bague annulaire ou tronconique.

11. Porte-gobelet (1) selon l'une quelconque des revendications précédentes, la partie d'extrémité ayant une taille et une forme suffisamment grandes pour recevoir une boîte à boisson métallique standard de 33 cl sur au moins 60 % de sa hauteur, de préférence au moins 70 %.
